(19) **Europäisches Patentamt / European Patent Office / Office européen des brevets**

(11) **EP 1 011 224 B1**

(12) **EUROPEAN PATENT SPECIFICATION**

(45) Date of publication and mention
of the grant of the patent:
**19.08.2009  Bulletin 2009/34**

(51) Int Cl.:
*H04N 7/52* *(2006.01)*       *H04N 7/24* *(2006.01)*

(21) Application number: **99402363.8**

(22) Date of filing: **28.09.1999**

(54) **Data rate conversion**

Umsetzung einer Datenrate

Conversion de débit de données

(84) Designated Contracting States:
**DE FR GB IT**

(30) Priority:  **02.10.1998   US 102873**

(43) Date of publication of application:
**21.06.2000   Bulletin 2000/25**

(73) Proprietor: **THOMSON CONSUMER ELECTRONICS, INC.
Indianapolis, IN 46290-1024 (US)**

(72) Inventors:
 • **Gothart Knutson, Paul
   92648 Boulogne Cédex (FR)**
 • **Ramaswamy, Kumar
   92648 Boulogne Cédex (FR)**

(74) Representative: **Domenego, Bertrand et al
Cabinet Lavoix
2, place d'Estienne d'Orves
75441 Paris Cedex 09 (FR)**

(56) References cited:
 EP-A- 0 680 216          WO-A-97/19560
 US-A- 5 619 337

 • **HOPKINS R: "DIGITAL TERRESTRIAL HDTV FOR NORTH AMERICA: THE GRAND ALLIANCE HDTV SYSTEM" IEEE TRANSACTIONS ON CONSUMER ELECTRONICS, IEEE INC. NEW YORK, US, vol. 40, no. 3, August 1994 (1994-08), pages 185-198, XP000471174 ISSN: 0098-3063**

**Description**

The present invention relates to a system for converting a packet transport stream from one packet rate to another packet rate.

Information is increasingly being transmitted digitally, and digital information may be transmitted in the form of a stream of packets carrying the information. For example, current digital television signals are transmitted by packet stream. The packet streams are encoded and modulated onto carriers using differing modulation schemes. For example, packet streams carrying terrestrial digital television signals in the United States are modulated using 8 level vestigial sideband modulation using trellis encoding (8VSB-t). Packet streams carrying digital cable television signals in the United States are modulated using 64 level or 256 level quadrature amplitude modulation (64QAM or 256QAM) or 16 level vestigial sideband modulation (16VSB). Packet streams carrying satellite television signals are modulated using quadrature phase-shift-keyed modulation (QPSK). Each packet stream is specially encoded for the modulation it will receive, resulting in different packet rates, and bit rates for the respectively modulated packetized bit streams, ranging from around 19 megabits per second (Mbps) for 8VSB-t to around 39 Mbps for 16VSB and 256QAM.

In some applications it is required that particular packets be processed at specific times or over specific time intervals. In particular in television signal transmission systems, it is required that e.g. image information in particular packets carrying video signal data be displayed at particular relative times. Otherwise, the image will appear too fast, too slow, or jerky due to jitter. To avoid this problem, time stamp information is generated at the transmitting location and inserted into the packet stream. These time stamps are used to ensure that images are displayed at correct times, minimizing the jitter problem described above.

It is sometimes desired to convert from one modulation format to another. For example, a digital television receiver may properly receive, decode and display only 16VSB or 8VSB-t modulated digital packet streams. But digital video cassette recorders (DVCR) and/or cable and satellite set top box receivers may properly receive and process only cable (64QAM, 256QAM, 16VSB) or satellite (QPSK) modulated digital packet streams. In order for the DVCR and cable or satellite set top boxes to properly operate with such a digital television, they must remodulate the received signal in the modulation recognized by the television receiver (16VSB or 8VSB-t).

It is also sometimes desired that additional information be added to the data stream by the DVCR or set top box. For example, on-screen displays (OSDs) may be generated to inform the user of the status of the DVCR or set top box. Specifically, in a DVCR, an OSD with the word "PAUSE" or "REWIND" may be generated as appropriate; or a complete bit-mapped graphic may be displayed. This information may be easily added to a component video signal. However, in digital transmission systems, it is much preferred to add OSD information as additional packets carrying auxiliary data in television program packet streams. The receiver decodes the auxiliary data packets, generates an OSD representative signal locally, and combines that signal with the video signal. However, television packet data streams are generally produced at the maximum data rate, meaning that every available bit is used for the digital information representing the television program. Little or no extra capacity is available to allocate to additional auxiliary (OSD) packets.

Prior systems provided decoders to completely decode the received packet stream and extract the component signals (i.e. video, audio, data, etc.). These component signals were then recoded and remodulated into the desired modulation format. As a part of this process, any included time stamps were extracted, recalculated and reinserted into the packet stream. In addition, at this time, auxiliary information, such as OSD information, was formed into packets, and combined with received signal to be recoded and remodulated. The remodulated signal was then supplied to the, e.g. television receiver. However, such a system required a full demodulator, decoder, encoder and modulator, and a packetizer for auxiliary information. This is expensive, especially because there is no significant processing performed on the component signals in the packet stream.

U.S. Patent application, serial number 09/187,318 or the European Patent Application EP 0 980185, entitled "Auxiliary Data Insertion in a Transport Datastream" filed November 16, 1998 by Knutson, illustrates another system for converting from one modulation format to another. In 09/187,318, a system is illustrated in which a packet stream in one format at a first bit rate is remodulated into another format at a second bit rate. In one embodiment, the first and second bit rates are equal, but the encoding of the bit stream is changed to delete some of the error detecting code bits, and replace the deleted bits with auxiliary information. More specifically, an input packet stream encoded using 8VSB-t, in which the trellis encoding adds one error detection bit for each two packet stream bits, is remodulated using 8VSB (no trellis encoding). By deleting the error detection bits added by the trellis encoder, one additional packet may be added for each two originally transmitted packets. These additional packets are used to transmit auxiliary information, or null packets if no auxiliary information is available.

In a second embodiment in 09/187,318, the second bit rate is a multiple of the first bit rate, and the extra bit rate capacity is used to transmit the auxiliary information. More specifically, the input packet stream is encoded using 8VSB-t, while the output packet stream is encoded using 16VSB. The output packet stream bit rate is two times the input packet stream bit rate. Thus, one additional packet may be added for each originally transmitted packet. These additional packets are used to transmit auxiliary information, or null packets if no auxiliary information is available. In both of these cases, the output packet stream bit rate is related to the input packet stream bit rate by a simple integer ratio: 1:3 in the first case, and 1:2 in the second case. A further prior art solution is disclosed in WO 97/19560

However, it may be desired to remodulate a packet stream at one bit rate to another packet stream at a bit rate which is not necessarily in a simple integer ratio with each other. For example, the bit rates of packet streams modulated by QAM and 16VSB, respectively, are not related by a simple integer ratio. Thus, when remodulating a QAM modulated packet stream to a 16VSB packet stream, it is not possible to simply insert a packet of auxiliary information into the output packet stream every n originally transmitted packets, as in 09/187,318, described above.

Still further, as described above, the timing of packets in these packet streams may be critical to proper decoding and display of the television image and sound represented by the packet stream, and time stamp information may be included in the packet stream. Thus, it is important to maintain the proper timing of the packets as much as possible during the remodulation process to ensure that any included time stamps are remain accurate.

A system which can remodulate a received packet stream signal at one bit rate into a packet stream at a different bit rate, not necessarily related to the first bit rate by a simple integer ratio, without requiring complete demodulation, decoding, encoding and remodulation of the component signals; which permits insertion of auxiliary data packets (e.g. OSD data); and which does not interfere with proper timing of the packets as maintained by time stamps is desirable.

In accordance with principles of the present invention, a remodulator system is provided as defined in the appended claims.

Such a system can operate successfully when the bit rate of the output signal is not related by a simple integer ratio to the bit rate of the input signal.

In the drawings:

Fig. 1 is a block diagram of a portion of a remodulation system according to the present invention;
Fig. 2 is a timing diagram useful in understanding the operation of the system illustrated in Fig. 1;
Fig. 3 is a more detailed block diagram of a numerically controlled oscillator which may be used in the system illustrated in Fig. 1;
Fig. 4 is a timing diagram useful in understanding the operation of the numerically controlled oscillator illustrated in Fig. 3;
Fig. 5 is a more detailed block diagram of a practical embodiment of a numerically controlled oscillator corresponding to that illustrated in Fig. 3; and
Fig. 6 is a timing diagram useful in understanding the operation of the numerically controlled oscillator illustrated in Fig. 5.

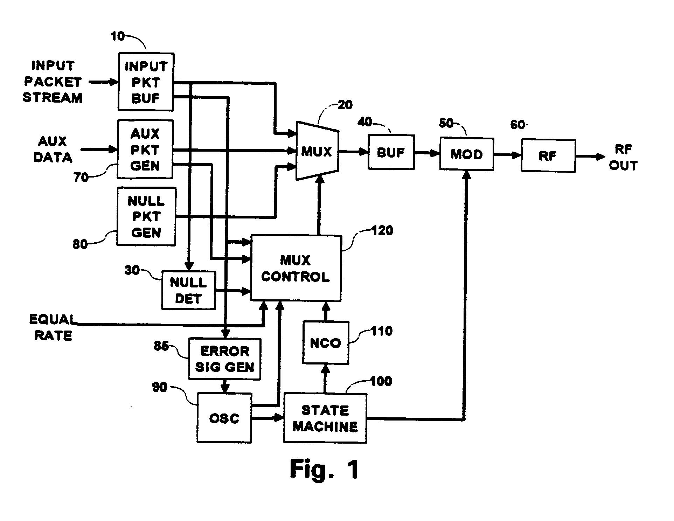

Fig. 1 is a block diagram of a portion of a remodulator system according to the present invention. In the illustrated embodiment, the remodulator is a part of a digital video cassette recorder in which digital signals representing a received packet stream in one format are recorded and then retrieved, and reformatted into a packet stream in another format. However, one skilled in the art will understand that such a remodulator system will find use in any system, such as a digital set top box, where the format of a packet stream must be changed.

Only those elements necessary for understanding the present invention are illustrated in Fig. 1. Other elements and interconnections among the elements are necessary in a complete remodulator system. One skilled in the art will understand what other elements are necessary, how to design and implement them, and interconnect them with the illustrated elements. One skilled in the art will also understand that other connections, such as status, control and clock signals exist among the illustrated elements but are not illustrated in order to simplify the drawing.

In Fig. 1, a source (not shown) of an input transport packet stream is coupled to an input terminal of an input packet buffer 10. The input transport packet stream source may be, for example, a playback circuit of a digital video cassette recorder or a set top box. The input transport packet stream source produces a digital signal carrying the transport packets, and an input clock signal synchronized to the input transport packets, in a known manner and supplies them both to the input packet buffer 10. A data output terminal of the input packet buffer 10 is coupled to a first data input terminal of a multiplexer (MUX) 20 and an input terminal of a null packet detector 30. An output terminal of the MUX 20 is coupled to an input terminal of a remodulation packet buffer 40. And output terminal of the remodulation packet buffer 40 is coupled to an input terminal of a modulator 50. An output terminal of the modulator 50 is coupled to an input terminal of an RF upconverter 60. An output terminal of the RF upconverter generates a RF signal at a predetermined frequency (e.g. channel 3) for reception by, for example, a digital television receiver (not shown).

A source of auxiliary data (not shown), which may be an on-screen display generator, is coupled to an input terminal of an auxiliary packet generator 70. A data output terminal of the auxiliary packet generator 70 is coupled to a second data input terminal of the multiplexer 20. An output terminal of a null packet generator 80 is coupled to a third data input terminal of the multiplexer 20.

An oscillator 90, which may be a voltage controlled crystal oscillator (VCXO), has a first output terminal coupled to an input terminal of a state machine 100 and a second input terminal, carrying a packet clock signal, coupled to a clock input terminal of a multiplexer controller 120. The state machine generates control signals for controlling the operation of the remodulation system illustrated in Fig. 1, not all of which are shown, in order to simplify the figure. A first control output terminal is coupled to the modulator 50, and a second control output terminal is coupled to an input terminal of a numerically controlled oscillator (NCO) 110.

The multiplexer controller 120 controls the operation of the MUX 20, in response to a plurality of control signals. A status output terminal from the input packet buffer 10 is coupled to a first input terminal of the multiplexer controller 120 and to an input terminal of an error signal generator 85. An output terminal of the error signal generator 85 is coupled to a control input terminal of the oscillator 90. A status output terminal from the auxiliary packet buffer 70 is coupled to a second input terminal of the multiplexer controller 120. An output terminal of the null detector 30 is coupled to a third input terminal of the multiplexer controller 120. A source of a signal indicating whether the bit rate of the input signal is substantially equal to the bit rate of the output signal is coupled to a fourth input terminal of the multiplexer controller 120. An output terminal of the NCO 110 is coupled to a fifth input terminal of the multiplexer controller 120. An output terminal of the multiplexer controller 120 is coupled to a control input terminal of the multiplexer 20.

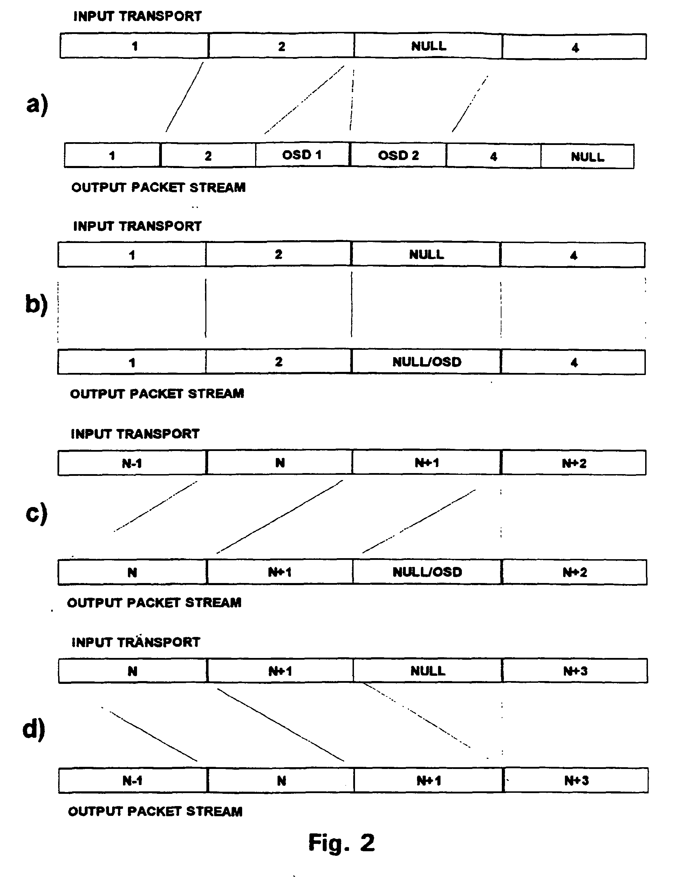

Fig. 2 is a timing diagram useful in understanding the operation of the remodulator system illustrated in Fig. 1. In Fig. 2, time is illustrated in the horizontal direction, and respective packets in different packet streams are illustrated by different horizontal lines of rectangles. The time duration of each packet is represented by the horizontal size of the rectangle and temporal location of each packet is represented by the horizontal location of the rectangle. In each of Figs. 2a through 2d, an upper line represents the input transport packet stream and a lower line represents the corresponding output packet stream.

In general, the remodulator of Fig. 1 operates to convert an input transport packet stream in one format into a modulated output packet stream in another format. The bit rate of the output packet stream is preferably greater than or equal to the bit rate of the input transport packet stream. It is possible to generate an output packet stream having a lower bit rate than that of the input transport packet stream only if the input transport packet stream has sufficient null packets that they can be removed to generate the output packet stream at the desired bit rate. If the bit rate of the output packet stream is equal to that of the input transport packet stream, the input transport packet stream must contain sufficient null packets to prevent buffer overflow, as described below.

When the bit rate of the output packet stream is greater than that of the input transport packet stream, additional packets are inserted into the output packet stream to generate the desired bit rate. This situation is illustrated in Fig. 2a. In Fig. 2a, the bit rate of the input transport packet stream is approximately, but not exactly, 2/3 of that of the output packet stream. Though illustrated as approximately 2/3, one skilled in the art will understand from the following description, that there need be no simple integer relationship between the respective bit rates of the input transport packet stream and the output packet stream.

In Fig. 2a, there are approximately three packets in the output packet stream in the time required for two packets in the input transport packet stream; or, put another way, each packet in the output packet stream takes approximately 2/3 of the time required by a packet in the input transport packet stream. Additional packets are inserted into the output packet stream at times selected to maintain the original temporal locations of the input transport packets to the extent possible, as described in more detail below. These additional packets are auxiliary packets containing auxiliary data (such as OSD data) if a packet of such auxiliary data is available. For example, in Fig. 2a, two input transport packets, 1 and 2 are inserted into the output packet stream as output packets 1 and 2. Then an additional packet is inserted into the output packet stream in order to temporally align the next input transport packet. In this case, it is assumed that an auxiliary (OSD) packet is available. Thus, an OSD packet, OSD 1, is next inserted into the output packet stream. If an auxiliary data packet is not available, then the additional packet is a null packet. This is illustrated after input transport packet 4. Because it is assumed no OSD packet is available at this time, a null packet is inserted into the output packet stream as the additional packet. One skilled in the art will understand that the sum of the bit rates of the input transport packet stream and the auxiliary data packet stream must be less than or equal to the bit rate of the output packet stream.

As described above, the input transport packet stream sometimes includes a null packet. When a null packet in the input transport data stream is detected, it may be either deleted, passed through to the modulator or replaced by an auxiliary data packet. If the bit rate of the output packet stream is greater than that of the input transport packet stream (Fig. 2a), then the presence of null packets may be ignored, and null packets may be treated as any other input transport packet to be inserted into the output packet stream. Alternatively, null packets may be detected and replaced by auxiliary data packets. This is illustrated in Fig. 2a in which a null packet (in the place of input transport packet 3) in the input transport packet stream is replaced by an OSD packet, OSD 2, in the output packet stream. The null packet could also have been inserted directly into the output packet stream, as described above.

The situation where the bit rate of the input transport packet stream is substantially equal to that of the output packet stream is illustrated in Figs. 2b through 2d. In general, when the bit rates are equal, packets in the input transport packet stream are inserted directly into the output packet stream, as illustrated in Fig. 2b. Also, in general, if the input packet stream contains a null packet, either that null packet is inserted into the output packet stream, or it is replaced with an auxiliary data packet. This is illustrated in Fig. 2b in which a null packet (inserted for input transport packet 3) is inserted into the output packet stream, or replaced with an OSD packet, if one is available.

If the bit rate of the output packet stream is slightly slower than that of the input transport packet stream, as described above, then, input transport packets arrive slightly faster than output packets depart. In this case, input transport packets slowly accumulate in the input packet buffer 10. Eventually, the input transport packet buffer 10 becomes full or nearly full. The input packet buffer 10 conditions its status signal to indicate that it is full or nearly full. In this situation, a null packet in the input transport packet stream is deleted to minimize potential overflow of the input packet buffer. This is illustrated in Fig. 2c, in which a null packet (inserted for input transport packet N + 2) is deleted. This enables the output packet stream to become temporally more aligned with the input transport packet stream.

In addition, when the input packet buffer becomes full or nearly full, the error signal generator 85 responds to the status signal from the input packet buffer 10 by conditioning the oscillator 90 to increase the frequency of the output clock signal. The clock signal from the oscillator 90 will increase the bit rate of the output packet stream, and more closely match the bit rate of the input packet stream, minimizing the possibility of an overflow of the input packet buffer 10.

Similarly, if the bit rate of the output packet stream is slightly faster than that of the input transport packet stream, as described above, output packets depart faster than input transport packets arrive. In this case, the input packet buffer 10 eventually runs out of packets. The input packet buffer 10 conditions its status signal to indicate that it is empty. In this situation additional packets, being either null packets or auxiliary data packets, are inserted into the output packet stream, to provide the required bits for the remodulation process. This is illustrated in Fig. 2d, in which an output packet N + 2 is required in the output packet stream, but it has not yet been received from the input transport packet stream source. A null or auxiliary data (OSD) packet is inserted into the output packet stream to fill the time for which the N + 2 input transport packet is not yet available.

In addition, when the input packet buffer becomes empty, the error signal generator 85 responds to the status signal from the input packet buffer 10 by conditioning the oscillator 90 to decrease the frequency of the output clock signal. The clock signal from the oscillator 90 will decrease the bit rate of the output packet stream, and more closely match the bit rate of the input packet stream, minimizing the possibility of an underflow of the input packet buffer 10.

If, on the other hand, the input transport buffer 10 is neither full or nearly full nor empty, and if a packet of auxiliary data is available, then the null packet in the input transport packet stream is replaced with an additional packet containing auxiliary data if an auxiliary data packet is available, as described above with reference to Fig. 2b. If auxiliary data is not available, then a null packet is inserted into the output packet stream.

More specifically, in operation, the input packet buffer 10 receives input transport packets and time-smooths any data bursts from, and compensates for jitter in, the input transport packet stream source (not shown). The buffered input transport packets are provided to the multiplexer 20 and the null packet detector 30. A status signal from the input packet buffer 10 indicates when the input packet buffer is full or nearly full, is empty, or is otherwise operating in a nominal mode (i.e. neither empty nor full). A status signal from the null packet detector 30 indicates when the next packet in the input packet buffer 10 is a null packet. The auxiliary data packet generator 70 receives auxiliary data (e.g. OSD data) from the system containing the remodulator illustrated in Fig. 1, accumulates the data and forms auxiliary data packets. The auxiliary data packets, when available, are provided to the multiplexer 20. A status signal from the auxiliary data packet generator 70 indicates when an auxiliary data packet is available. The null packet generator 80 continually generates a null packet, and provides the null packet to the multiplexer 20. The equal rate signal provides an indication of whether the bit rate of the output packet stream is substantially equal to that of the input transport packet stream.

In a digital television signal, packets must be present in the packet stream at specific times, or time intervals, in order for time stamps inserted into the packet stream to maintain accurate control of the display of the television program carried by the packet stream. In order to preserve this timing during the remodulation process, input transport packets must be inserted into the output packet stream at substantially the same temporal locations as they were in the input transport packet stream. The additional packets inserted into the packet stream to produce the proper output bit rate must be inserted between the inserted input transport packets. Furthermore, this timing must be maintained despite the fact that the bit rates of the input transport packet stream and the output packet stream are not in a simple integer ratio.

To control this, the combination of the oscillator 90, state machine 100 and numerically controlled oscillator (NCO) 110 produces a bistate control signal having a first state for times when an input transport packet must be inserted into the output packet stream, and a second state at times when an additional packet (either auxiliary or null) must be inserted, in a manner to be described in more detail below. A signal generated in this manner may be controlled to have the appropriate duty cycle for substantially any ratio of bit rates. The "input/additional" signal is supplied to the multiplexer control circuit 120.

The multiplexer control circuit 120 operates in response to these status signals, and to the packet clock signal received from the oscillator 90, to provide a control signal to the MUX 20. In response to this control signal, the MUX 20 operates to selectively couple either an input transport packet, an auxiliary data packet or a null packet to its output terminal, in a manner described in more detail below. The MUX 20, thus generates an output packet stream having a bit rate required by desired the modulation technique. The packet stream from the MUX 20 is buffered by the remodulation packet buffer 40 to smooth out any timing jitter.

The modulator 50 formats the digital packet stream from the remodulation packet buffer 40 in the appropriate manner to produce a data stream at the predetermined modulation bit rate, and modulates the formatted data stream. In the illustrated embodiment, the packet stream is 16VSB modulated, as described above, and has a bit rate of around 39 Mbps. It is possible for the output packet stream to be modulated according to any modulation scheme, for example, either 16VSB or 8VSB. The control signal from the state machine 100 controls the modulation scheme used by the modulator 50, while other control signals control the bit rate of the output packet stream to conform to the selected modulation scheme. The modulated packet stream from the modulator 50 is then upconverted by the RF upconverter 60 to a desired RF frequency, for example, the channel 3 frequency which may be received by a digital television receiver.

Referring now to the operation of the combination of the MUX 20 and the multiplexer controller circuit 120, there are five basic functions which may be performed: 1) insert an input transport packet into the output packet stream; 2) insert a null packet into the output packet stream; 3) insert an auxiliary data packet into the output packet stream; 4) delete a null packet from the input transport packet stream; and 5) replace a null packet in the input transport packet stream with an auxiliary data packet in the output packet stream (which is a combination of 3) and 4)). The function performed is controlled by the multiplexer control circuit 120 in response to the status signals, as described above.

As described above, the transport/additional status signal from the NCO 110 indicates times when an input transport packet should be placed in the next packet slot in the output packet stream and times when an additional packet (auxiliary or null) should be placed in the next packet slot in the output packet stream. This status signal is always set to "transport" when the bit rate of the input transport packet stream is equal to that of the output packet stream. When the packet clock signal from oscillator 90 indicates the occurrence of the next output packet slot, an input transport packet is inserted into the output packet stream if this status signal indicates that a transport packet is required, and either an auxiliary or null packet is inserted into the output packet stream if this status signal indicates that an additional packet is required.

The null detect signal from the null detector 30 indicates that the next input transport packet in the input packet buffer is a null packet. If the bit rate of the output packet signal is greater than that of the input transport packet stream, then this signal may be ignored, and the null packet treated just as any other packet in the input transport packet stream. If the bit rate of the output packet stream is substantially equal to that of the input transport packet stream, then the null detect signal is processed as follows. If the input packet buffer 10 is full or nearly full, as indicated by its status signal, then the detected null packet is deleted. If the input packet buffer 10 is not full, and an auxiliary data packet is available, as indicated by the status signal from the auxiliary packet generator 70, then the auxiliary data packet may be substituted for the null packet. Otherwise the null packet is inserted into the output packet stream.

The auxiliary data available signal from the auxiliary data packet generator 70 indicates that a packet of auxiliary data is available. If the transport/additional status signal indicates that an additional packet is required, and the auxiliary data available signal indicates that an auxiliary data packet is available, then the auxiliary data packet is inserted into the output packet stream. Or if the bit rate of the input transport packet stream bit is substantially equal to that of the output packet stream, the next packet in the input transport packet stream packet is a null packet and the input packet buffer is not full or nearly full, then the auxiliary data packet is inserted into the output packet stream.

The status signal from the input packet buffer 10 indicates whether the input packet buffer 10 is full or nearly full, is empty, or is otherwise operating nominally (i.e. neither full nor empty). If the buffer is full or nearly full, then any null packets detected in the input transport packet stream, as indicated by the status signal from the null detector 30, are deleted. If the buffer is empty, then additional packets (either auxiliary or null packets) are inserted into the output packet stream. If the buffer is operating nominally, then neither of these actions are taken.

The equal rate signal indicates whether the bit rate of the output packet stream is substantially equal to that of the input packet stream. The response of the multiplexer control circuit 120 to this signal has been described above.

The multiplexer control circuit 120 generates the control signal for the MUX 20. This signal may be three binary signals: a first for conditioning the MUX 20 to couple an input transport packet from the input packet buffer 10 to the remodulation packet buffer 40; a second for conditioning the MUX 20 to couple an auxiliary data packet from the auxiliary packet generator 70 to the remodulation packet buffer 40; and a third for conditioning the MUX 20 to couple a null packet from the null packet generator 80 to the remodulation packet buffer 40. Alternatively, the control signal could be a two-bit binary encoded signal having a value which indicates which of the above actions is to be taken.

The multiplexer control circuit 120 may be designed and implemented as hardwired logic, either combinatorial or sequential, or as a software program executing on a microprocessor. One skilled in the art will understand how to design and implement such a control circuit 120 in either form.

The state machine 100 controls the overall operation of the remodulator illustrated in Fig. 1. One skilled in the art will understand the sequencing and the control signals required to properly time the operation of the remodulator illustrated in Fig. 1, and will understand how to design and implement a state machine 100 for generating those control signals.

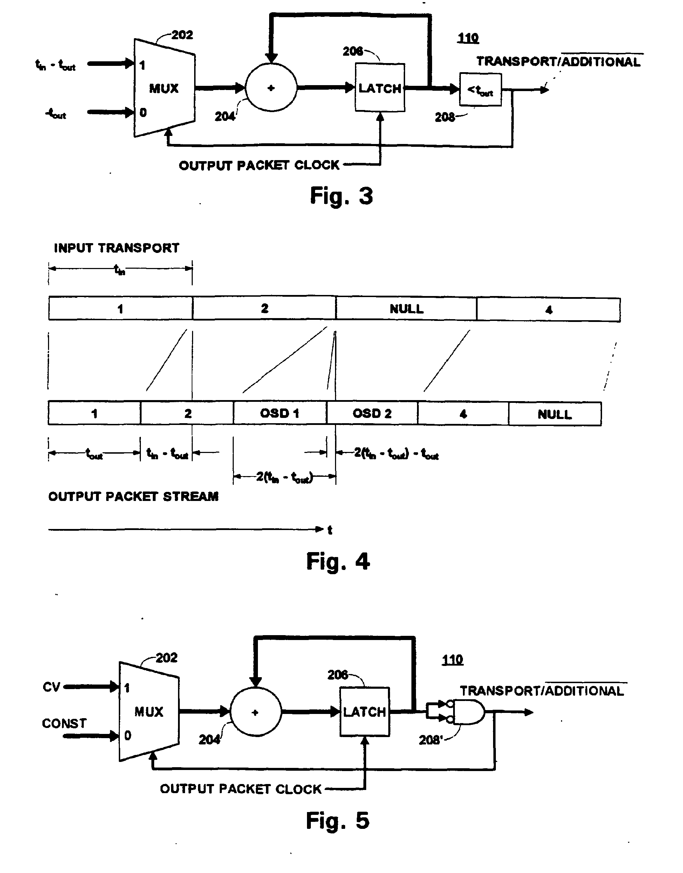

Fig. 3 is a more detailed block diagram of a numerically controlled oscillator 110 which may be used in the system illustrated in Fig. 1, and Fig. 4 is a timing diagram useful in understanding the operation of the numerically controlled oscillator 110 illustrated in Fig. 3. In Fig. 3, the lines represent digital signal carrying lines, and thicker lines represent multibit digital signals having more bits than thinner lines. In Fig. 3, a signal representing the difference in time duration between the input and output transport packets, $t_{in}$ - $t_{out}$, is coupled to a first data input terminal of a multiplexer (MUX) 202. A signal representing the negative of the time duration of the output transport packet, -$t_{out}$, is coupled to a second data input terminal of the MUX 202. An output terminal of the MUX 202 is coupled to a first input terminal of an adder 204. An output terminal of the adder 204 is coupled to an input terminal of a latch 206. An output terminal of the latch 206 is coupled to a second input terminal of the adder 204. The latch 206 is clocked by the output packet clock signal. The combination of the adder 204 and latch 206 form an accumulator.

The output terminal of the latch 206 is also coupled to an input terminal of a comparator 208. An output terminal of the comparator 208 generates the transport/additional signal, described above, which is also coupled to a control input terminal of the MUX 202. The transport/additional signal has a logic '1' value at times when a packet from the input transport packet stream is to be inserted into the output packet stream, and a logic '0' value at times when an additional packet (auxiliary or null) is to be inserted into the output packet stream. This is further indicated by the horizontal line over "additional" in Fig. 3. The transport/additional signal is coupled to the multiplexer control circuit 120 (of Fig. 1).

In general operation, the value of the signal at the output of the latch 206 (i.e. the output of the accumulator) represents the amount of time the input transport packet stream is in advance of the output packet stream. While this value is less than the time duration of an output packet stream packet, then input transport packets must be inserted into the output packet stream because there is no time for an additional packet in the output packet stream. When, however, this value becomes greater than the time duration of an output packet stream packet, this indicates that there is time for an additional packet to be inserted into the output packet stream. When this occurs, the time duration of an output packet is subtracted from this value to make up for the additional packet inserted into the output packet stream and the operation continues, all as described in more detail below.

The comparator 208 compares the value of the signal from the latch 206 to a value representing the time duration of the output packet $t_{out}$. If the value of the latch 206 output signal is less than the value of the time duration of the output packet $t_{out}$, then the comparator 208 generates a logic '1' signal, indicating that an input transport packet is to be inserted into the output packet stream. If the value of the latch 206 output signal is greater than the value of the time duration of the output packet $t_{out}$, then the comparator 208 generates a logic '0' signal, indicating that an additional packet is to be inserted into the output packet stream.

Referring to Fig. 4, the starting time of the packet 1 in the input transport packet stream is temporally aligned with the starting time of packet 1 in the output packet stream. At this time, and under this condition, the value at the output terminal of the latch 206 is zero. This is less than the value of the time duration of the output packet $t_{out}$ and the comparator 208, thus, generates a logic '1' signal. This indicates that an input transport packet is to be inserted into the output packet stream, and conditions the multiplexer 202 to couple the time difference signal $t_{in}$ - $t_{out}$ to the input of the adder 204, whose output now has the value of $t_{in}$ - $t_{out}$.

The latch 206 is clocked at the ending time of output packet 1, and the latch 206 output signal becomes $t_{in}$ - $t_{out}$. In the illustrated embodiment, this is still less than the time duration of the output packet $t_{out}$ so the output of the comparator 208 remains a logic '1' signal. The multiplexer 202, thus, continues to couple the time difference signal $t_{in}$ - $t_{out}$ to the input of the adder 204, whose output now has the value of $2(t_{in}$ - $t_{out})$.

The latch 206 is then clocked at the ending time of output packet 2, and the latch 206 output signal becomes $2(t_{in}$ - $t_{out})$. In the illustrated embodiment, this is greater than the time duration of the output packet $t_{out}$. The comparator 208, thus, generates a logic '0' signal. This indicates that an additional packet is to be inserted into the output packet stream, and conditions the multiplexer 202 to couple the -$t_{out}$ signal to the input of the adder 204, whose output now has the value of $2(t_{in}$ - $t_{out})$ - $t_{out}$. This represents the time the input transport packet stream remains in advance of the output packet stream after the additional packet has been inserted into the output packet stream.

The latch 206 is clocked again at the ending time of the additional packet OSD1, and the latch 206 output signal becomes $2(t_{in}$ - $t_{out})$ - $t_{out}$. This is less than the time duration of the output packet $t_{out}$ so the output of the comparator 208 becomes a logic '1' signal. In response, the multiplexer 202 couples the time difference signal $t_{in}$ - $t_{out}$ to the input of the adder 204, and an input transport packet is inserted into the output packet stream. The operation described above is repeated continually, inserting additional packets into the output packet stream when there is time enough to fit them in among the input transport packets. The circuit illustrated in Fig. 3 can operate for any time durations for the input and output packets. More specifically, these time durations do not have to be in an integer ratio.

Fig. 5 is a more detailed block diagram of a practical embodiment of a numerically controlled oscillator 110 corresponding to that illustrated in Fig. 3. In Fig. 5, those elements which are the same as those illustrated in Fig. 3 are designated with the same reference numbers and are not described in detail below. In Fig. 5, two adjustments are made to the circuit illustrated in Fig. 3. First, numbers representing values are maintained as binary fixed point numbers having the bit format "SI.FFF..." where S represents a sign bit, I represents an integer bit and F represents fractional bits, all in a known manner. The accuracy with which the NCO 110 operates depends upon the size of these numbers. In a preferred embodiment these numbers are 24 bits in width.

Second, values of the various parameters are normalized to the time duration of the output packets $t_{out}$. That is, the time duration parameters are all expressed as fractions of an output packet time duration $t_{out}$. In addition, the packet time duration values are replaced by corresponding packet rate values, as described in more detail below. These adjustments make implementation of the NCO 110 easier to fabricate and more efficient to operate.

More specifically, the various parameters are normalized by dividing them by $t_{out}$ in a known manner. In addition, the packet time duration parameters are replaced by packet rate parameters: the input transport packet rate is designated $r_v$, and equals 1 /tin; the output packet rate is designated r, and equals 1 /$t_{out}$.

$$CV = \frac{t_{in} - t_{out}}{t_{out}}$$

$$= \frac{t_{in}}{t_{out}} - 1 \qquad\qquad (1)$$

$$= \frac{r_t}{r_v} - 1$$

Consequently, the time difference parameter $t_{in}$ - $t_{out}$, coupled to the first input terminal of the multiplexer 202, is normalized to a control value CV as illustrated in equation (1). The control value CV is coupled to the NCO 110 from the state machine 100 (of Fig. 1).

The $t_{out}$ signal supplied to the second input terminal of the multiplexer 202 (of Fig. 3) is normalized to a value of -1, and the value compared in comparator 208 (of Fig. 3) is normalized to a value of 1. Because the comparator 208 (of Fig. 3) compares the value of the output signal of the latch 206 to 1, and because values are represented by fixed point binary numbers, the comparator 208 may be implemented by a two-input, negative input, AND gate 208', which is responsive to the most significant two bits (S and I) of the output of the latch 206, representing the sign and integer portion of the latch output value. The AND gate 208' generates a logic '1' signal when the value of both of these two bits is logic '0', indicating a value less than 1. If either of these bits is logic '1', indication a value greater than 1, then the AND gate 208' generates a logic '0' signal. The remainder of the circuit illustrated in Fig. 5 operates as described above with reference to Fig. 3.

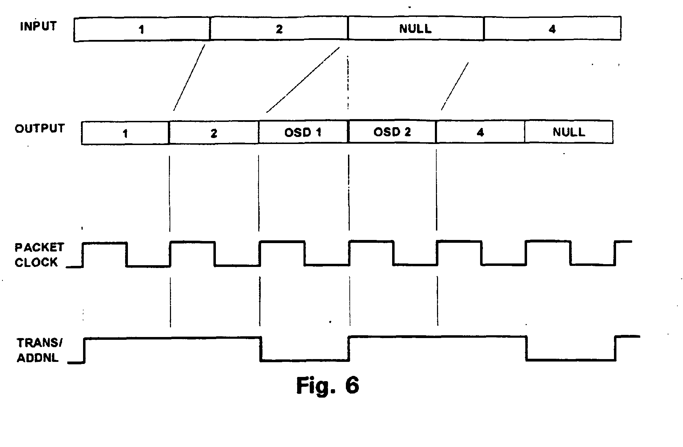

Fig. 6 is a timing diagram useful in understanding the operation of the numerically controlled oscillator illustrated in Fig. 5. In Fig. 6, the top two lines represent the input transport packet stream and corresponding output packet stream as illustrated in Fig. 2a. The third waveform represents the packet clock supplied to the multiplexer controller 120 from the oscillator 90. Each leading edge of the packet clock identifies the beginning of a packet slot in the output packet stream. At the beginning of each packet slot in the output packet stream (i.e at the leading edge of the packet clock) the transport/additional signal is sampled. If it is a logic '1', then an input transport packet is inserted into the output packet stream. If it is a logic '0' an additional (auxiliary or null) packet is inserted into the output packet stream, all as described in more detail

The input datastream can exhibit a QPSK modulation format or a QAM (64-QAM or 256-QAM) modulation format, while the output datastream can exhibit a VSB modulation format (8-VSB or 16-VSB), for example. Other input/ output modulation formats are possible.

**Claims**

1.  A remodulator system, for producing an output packet stream having a first modulation format having a first rate, the remodulator system comprising:

    a source of a stream of input transport packets having a second modulation format having a second rate, said first and second modulation formats being different from each other;
    a source (70) of additional packets;
    a multiplexer (20), coupled to the input transport packet stream source and the additional packet source, for generating the output packet stream;
    a source (110) of a control signal, responsive to the first and second rates, for generating the control signal having a first state when an input transport packet should be inserted into the output packet stream and a second state when additional packets (4) should be inserted into the output packet stream, said second state comprising one of a first signal for inserting auxiliary data packets, and a second for inserting NULL packets,
wherein the control signal source (110) is configured to accumulate the amount of the time the input transport packet stream is in advance of the output packet stream, and to generate the control signal having the second state when the accumulated time is greater than a time duration of each output packet, and having the first state otherwise
and
a multiplexer controller (120), coupled between the control signal source (110) and the multiplexer (20), for conditioning the multiplexer (20) to insert an input transport packet into the output packet stream when the control signal has the first state, and to insert an additional packet into the output packet stream when the control signal has the second state.

2. The system of claim 1 wherein when the control/signal source (110) is configured to generate the control signal having the second state, the time duration of an output packet is decremented from the accumulated time.

3. The system of claim 1 wherein the control signal source (110) comprises:

an accumulator (204, 206) for generating signal having a value representing the time the input packet stream is in advance of the output packet stream;
a comparator (208) for comparing the accumulator output signal to a signal representing an output packet time duration, and if the value represented by the accumulator output signal is less than the value representing an output packet time duration, generating the control signal having the first state, and if the value represented by the accumulator output signal is greater than the value representing an output packet time duration, generating the control signal having the second state.

4. The system of claim 3 wherein the control signet source (110) further comprises:

a source of a time difference signal having a value representing the difference in input packet time duration and output packet time duration;
a source of an output packet time signal having a value representing the time duration of an output packet; and
the accumulator (204, 206) is responsive to the time difference signal and the output packet time signal, for incrementing by the value of the time difference signal when the control signal has the first state, and decrementing by the value of the output packet time signal when the control signal has the second state.

5. The system of claim 4 wherein:

the time difference signal source is configured to generate a signal CV having the value:

$$CV = \frac{r_i}{r_v} - 1 \qquad\qquad 25$$

where the value $r_v$ is the input transport packet rate and $r_i$ is the output packet rate;
the output packet time signal source is configured to generate a signal having, the value -1 ; and
the comparator (208) is configured to compare the accumulated time signal to a signal having the value 1.

6. The system of claim 4 wherein the accumulator further comprises;

a multiplexer (202), having a first data input terminal coupled to the time difference signal source, a second data input terminal coupled to the output packet time signal source, a control input terminal responsive to the control signal, and an output terminal;
an adder (204), having a first input terminal coupled to the output terminal of the multiplexer, a second input terminal, and an output terminal; and
a latch (206), having an input terminal coupled to the output terminal of the adder, and an output terminal coupled to the second input terminal of the adder and to the comparator.

7. The system of claim 1 wherein:

the system further comprises a source (208, 208') of an output packet clock signal for indicating when an output packet is to be inserted into the output packet stream; and

an accumulator configured to sample the control signal in response to the output packet clock signal and inserts an input transport packet into the output packet stream in response to the output packet clock signal when the sampled control signal has the first state, and insert an additional packet into the output packet stream in response to the output packet clock signal when the sampled control signal has the second state.

8. The system of claim 1 wherein the control signal source comprises a variable duty cycle oscillator (90) configured to generate the control signal having a duty cycle having an 'on' time representing the fraction of the time input transport packets should be inserted into the output packet stream, and an "off" time representing the fraction of the time additional packets should be inserted into the packet stream.

9. The system of claim 8 wherein the variable duty cycle oscillator (90) comprises:

an accumulator, having an input end an output terminal, for incrementing the value of the signal at the output terminal by the value of the signal at the input terminal;
a control signal generator, coupled to the output terminal of the accumulator, for generating the control signal;
a multiplexer, coupled to the input terminal of the accumulator and responsive to the control signal, for coupling a control value to the input terminal of the accumulator when the control signal has the first state and for coupling a control value to the input terminal of the accumulator when the control signal has the second state.

10. The system of claim 9 wherein the control signal generator comprises circuitry for generating the control signal having the first state when the value at the output terminal of the accumulator is less than a predetermined value and having the second state otherwise.

11. The system of claim 9 wherein:

the input transport packet stream has a second bit rate and the output packet stream has a first bit rata; and
the control value has the value CV:

$$CV = \frac{r_i}{r_v} - 1$$

where $r_v$ is the bit rate of the input packet stream and $r_i$ is the bit rate of the output transport packet stream.

12. The system of claim 1 wherein:

the additional packet source-comprises:

a source (70) of auxiliary data packets, responsive to a source of auxiliary data, and configured to generate a status signal indicating that an auxiliary data packet is available; and
a source (80) of null packets; and the multiplexer controller (120) is further responsive to the status signal from the auxiliary packet source, for inserting an auxiliary data packet in the output packet stream as an additional packet if an auxiliary data packet is available, and inserting a null packet in the output packet stream as an additional packet if an auxiliary data packet is not available.

13. The system of claim 1 wherein:

the input transport packet stream has a second bit rate and the output packet stream has a first bit rate greater than the second bit rate;
the additional packet source further comprises:

a source (70) of auxiliary data packets, responsive to a source of auxiliary data, and configured to generate a status signal indicating that an auxiliary data packet is available; and
a source (80) of null packets;

the system further comprises a null packet detector (30), coupled to the input transport packet stream source, for generating a status signal indicating if a next input transport packet is a null packet;
the multiplexer (10) is further coupled to the auxiliary data packet source (70) and the null packet source (80); and
the multiplexer control circuit (120) is responsive to the status signal from the auxiliary data packet source, for conditioning the multiplexer (20) to insert an auxiliary data packet into the output packet stream as an additional packet if an auxiliary data packet is available, and otherwise to insert a null packet into the output packet stream as an additional packet,

14. The system of claim 13 wherein:

the input transport packet stream contains null packets;
the system further comprises a null packet detector (30), coupled to the input transport packet stream source, for generating a status signal indicating if a next input transport packet is a null packet; and
the multiplexer controller (120) is further responsive to the status signal from the auxiliary packet source and the status signal from the null packet detector, for substituting an auxiliary data packet for the null packet in the output packet stream.

15. The system of claim 1 further comprising a modulator (50), coupled to the multiplexer (20), for modulating the output packet stream.

16. The system of claim 1 wherein:

respective packets in the input packet stream are meant to be transmitted at corresponding predetermined times; and
the multiplexer controller is configured to condition the multiplexer to insert respective input transport packets into the output packet stream at substantially the corresponding times.

17. The system of claim 1, wherein:

the input packet stream format is compatible with one of a QAM or QPSK modulation format; and
the output packet stream format is compatible with an 8-VSB or 16-VSB modulation format.

18. The system of claim 7, wherein:

the source (70) of the additional packet stream represents auxiliary on-screen display OSD information.

19. The system of claim 7, wherein:

the input packet stream format is compatible with one of QAM, QPSK or VSB modulation formats; and
the output packet stream format is compatible with a different one of said QAM, QPSK or VSB modulation formats.

20. The system of claim 1 wherein said first modulation format and said second modulation format have a non-integer ratio.

**Patentansprüche**

1. Remodulatorsystem zur Herstellung eines Ausgabepaketstroms mit einem ersten Modulationsformat mit einer ersten Rate, wobei das Remodulatorsystem folgendes umfasst:

Eine Quelle eines Stroms von Eingabetransportpaketen mit einem zweiten Modulationsformat mit einer zweiten Rate, wobei das erste und das zweite Modulationsformat voneinander verschieden sind;

- eine Quelle (70) zusätzlicher Pakete,
- einen Multiplexer (20), der mit der Eingabetransportpaketstromquelle und der zusätzlichen Paketquelle zum Erzeugen des Ausgabepaketstroms gekoppelt ist,
- eine Quelle (110) eines Steuersignals, das auf die erste und die zweite Rate zum Erzeugen des Steuersignals anspricht, das einen ersten Zustand, wenn ein Eingabetransportpaket in den Ausgabepaketstrom eingefügt werden sollte, und einen zweiten Zustand aufweist, wenn zusätzliche Pakete (4) in den Ausgabepaketstrom eingefügt werden sollten, wobei der zweite Zustand ein erstes Signal zum Einfügen von Hilfsdatenpaketen und ein zweites, zum Einfügen von NULL-Paketen umfasst,

wobei die Steuersignalquelle (110) so ausgebildet ist, dass die Menge der Zeit, die der Eingabetransportpaketstrom dem Ausgabepaketstrom voraus ist, akkumuliert und das Steuersignal erzeugt wird, das den zweiten Zustand hat, wenn die akkumulierte Zeit größer ist als eine Zeitspanne jedes Ausgabepakets, und ansonsten den ersten Zustand hat, und
einen Multiplexer-Kontroller (120), der zwischen die Steuersignalquelle (110) und den Multiplexer (20) zum Konditionieren des Multiplexers (20) zum Einfügen eines Eingabetransportpakets in den Ausgabepaketstrom, wenn das Steuersignal den ersten Zustand hat, und zum Einfügen eines zusätzlichen Pakets in den Ausgabepaketstrom, wenn das Steuersignal den zweiten Zustand hat, geschaltet ist.

2. System nach Anspruch 1, bei dem, wenn die Steuersignalquelle (110) zum Erzeugen des Steuersignals mit dem zweiten Zustand konfiguriert ist, die Zeitspanne eines Ausgabepakets von der akkumulierten Zeit abgezogen wird.

3. System nach Anspruch 1, bei dem die Steuersignalquelle (110) folgendes umfasst:

Einen Akkumulator (204, 206) zum Erzeugen eines Signals mit einem Wert, der die Zeit repräsentiert, die der Eingabepaketstrom dem Ausgabepaketstrom voraus ist;
einen Komparator (208) zum Vergleichen des Akkumulator-Ausgabesignals mit einem eine Ausgabepaketzeitspanne repräsentierenden Signal und, falls der durch das Akkumulator-Ausgabesignal repräsentierte Wert kleiner ist als der eine Ausgabepaketzeitspanne repräsentierende Wert, Erzeugen des Steuersignals mit dem ersten Zustand, und, falls der durch das Akkumulator-Ausgabesignal repräsentierte Wert größer ist als der eine Ausgabepaketzeitspanne repräsentierende Wert, Erzeugen des Steuersignals mit dem zweiten Zustand.

4. System nach Anspruch 3, bei dem die Steuersignalquelle (110) ferner folgendes umfasst:

Eine Quelle eines Zeitdifferenzsignals, das einen Wert aufweist, der die Differenz in der Eingabepaketzeitdauer und der Ausgabepaketzeitdauer repräsentiert;
eine Quelle eines Ausgabepaketzeitsignals, das einen Wert aufweist, der die Zeitspanne eine Ausgabepakets repräsentiert, und

wobei der Akkumulator (204, 206) auf das Zeitdifferenzsignal und das Ausgabepaketzeitsignal zur Inkrementierung um den Wert des Zeitdifferenzsignals, wenn das Steuersignal den ersten Zustand hat, und Dekrementierung um den Wert des Ausgabepaketzeitsignals, wenn das Steuersignal den zweiten Zustand hat, anspricht.

5. System nach Anspruch 4, bei dem die Zeitdifferenzsignalquelle zum Erzeugen eines Signals CV mit dem Wert:

$$CV = \frac{rt}{rv} - 1 \qquad\qquad 25$$

konfiguriert ist, wobei der Wert die Eingabetransportpaketrate und $r_t$ die Ausgabepaketrate ist,
die Ausgabepaketzeitsignalquelle zum Erzeugen eines Signals mit dem Wert -1 konfiguriert ist, und
der Komparator (208) zum Vergleichen des akkumulierten Zeitsignals mit einem Signal mit dem Wert 1 konfiguriert ist.

6. System nach Anspruch 4, bei dem der Akkumulator ferner folgendes umfasst:

Einen Multiplexer (202) mit einem ersten mit der Zeitdifferenzsignalquelle verbundenen Dateneingabeterminal, einen zweiten, mit der Ausgabepaketzeitsignalquelle verbundenen Dateneingabeterminal, einen auf das Steuersignal ansprechende Steuereingabeterminal und einen Ausgabeterminal;
einen Addierer (204) mit einem ersten, mit dem Ausgabeterminal des Multiplexers verbundenen Eingabeterminal, einen zweiten Eingabeterminal und einen Ausgabeterminal und
einen Signalspeicher (206) mit einem mit dem Ausgabeterminal des Addierers verbundenen Eingabeterminal und einem mit dem zweiten Eingabeterminal des Addierers und dem Komparator verbundenen Ausgabeterminal.

**7.** System nach Anspruch 1, bei dem
das System ferner eine Quelle (208, 208') eines Ausgabepakettaktsignals zum Anzeigen, wenn ein Ausgabepaket in den Ausgabepaketstrom einzufügen ist, und
einen Akkumulator umfasst, der zum Abtasten des Steuersignals als Antwort auf das Ausgabepakettaktsignal konfiguriert ist und ein Eingabetransportpaket in den Ausgabepaketstrom in Beantwortung des Ausgabepakettaktsignals einfügt, wenn das abgetastete Steuersignal den ersten Zustand hat, und ein zusätzliches Paket in den Ausgabepaketstrom in Beantwortung des Ausgabepakettaktsignals einfügt, wenn das abgetastete Steuersignal den zweiten Zustand hat.

**8.** System nach Anspruch 1 bei dem die Steuersignalquelle einen Oszillator (90) mit variablem Tastgrad umfasst, der zum Erzeugen des Steuersignals mit einem Tastgrad mit einer "on"-Zeit, die die Fraktion der Zeit repräsentiert, in der Eingabetransportpakete in den Ausgabepaketstrom einzufügen sind, und einer "off"-Zeit, die die Fraktion der Zeit repräsentiert, in der zusätzliche Pakete in den Paketstrom einzufügen sind, konfiguriert ist.

**9.** System nach Anspruch 8, bei dem Oszillator (90) mit dem variablem Tastgrad folgendes umfasst:

Einen Akkumulator mit einem Eingabe- und einem Ausgabeterminal zum Inkrementieren des Wertes des Signals am Ausgabeterminal um den Wert des Signals am Eingabeterminal,
einen Steuersignalgenerator zum Erzeugen des Steuersignals, der mit dem Ausgabeterminal des Akkumulators verbunden ist,
einen mit dem Eingabeterminal des Akkumulators verbundenen und auf das Steuersignal ansprechende Multiplexer zum Anlegen eines Steuerwertes an den Eingabeterminal des Akkumulators, wenn das Steuersignal den ersten Zustand hat, und zum Anlegen eines Steuerwertes an den Eingabeterminal des Akkumulators, wenn das Steuersignal den zweiten Zustand hat.

**10.** System nach Anspruch 9, bei dem der Steuersignalgenerator eine Schaltung zum Erzeugen des Steuersignals umfasst, das den ersten Zustand, wenn der Wert am Ausgabeterminal des Akkumulators kleiner ist als ein vorherbestimmter Wert, und im Übrigen den zweiten Zustand aufweist.

**11.** System nach Anspruch 9, bei dem
der Eingabetransportstrom eine zweite Bit-Rate und der Ausgabepaketstrom eine erste Bit-Rate aufweist und der Steuerwert den Wert CV:

$$CV = \frac{rt}{rv} - 1$$

aufweist, wobei *rv* die Bit-Rate des Eingabepaketstroms und *rt* die Bitrate des Ausgabetransportpaketstroms ist.

**12.** System nach Anspruch 1, bei dem die zusätzliche Paketquelle folgendes umfasst:

Eine Quelle (70) von Hilfsdatenpaketen, die auf eine Quelle von Hilfsdaten anspricht und zum Erzeugen eines Statussignals konfiguriert ist, das anzeigt, dass ein Hilfsdatenpaket verfügbar ist, und
eine Quelle (80) von Null-Paketen,

wobei der Multiplexerkontroller (120) ferner anspricht auf das Statussignal von der Hilfspaketquelle zum Einfügen eines Hilfsdatenpakets in den Ausgabepaketstrom als ein zusätzliches Paket, falls ein Hilfsdatenpaket verfügbar ist, und Einfügen eines Null-Pakets in den Ausgabepaketstrom als ein zusätzliches Paket, falls ein Hilfsdatenpaket nicht verfügbar ist.

**13.** System nach Anspruch 1, bei dem
der Eingabetransportpaketstrom eine zweite Bitrate und der Ausgabepaketstrom eine erste Bitrate aufweist, die größer ist als die zweite Bitrate,
die zusätzliche Paketquelle folgendes umfasst:

Eine Quelle (70) von Hilfsdatenpaketen, die auf eine Quelle von Hilfsdaten anspricht und zum Erzeugen eines Statussignals konfiguriert ist, das anzeigt, dass ein Hilfsdatenpaket verfügbar ist, und

eine Quelle (80) von Null-Paketen,

wobei das System ferner einen mit der Eingabetransportpaketstromquelle verbundenen Null-Paketdetektor (30) zum Erzeugen eines Statussignals umfasst, das anzeigt, ob ein nächstes Eingabetransportpaket ein Null-Paket ist, der Multiplexer (10) ferner mit der Hilfsdatenpaketquelle (70) und der Null-Paketquelle verbunden ist und der Multiplexer-Steuerkreis (120) anspricht auf das Statussignal von der Hilfsdatenpaketquelle zum Konditionieren des Multiplexers (20) zum Einfügen eines Hilfsdatenpakets in den Ausgabepaketstrom als ein zusätzliches Paket, falls ein Hilfsdatenpaket verfügbar ist, und im Übrigen zum Einfügen eines Null-Pakets in den Ausgabepaketstrom als ein zusätzliches Paket.

**14.** System nach Anspruch 13, bei dem
der Eingabetransportpaketstrom Null-Pakete enthält,
das System ferner einen mit der Eingabetransportpaketstromquelle verbundenen Null-Paketdetektor (30) zum Erzeugen eines Statussignals umfasst, das anzeigt, ob ein nächstes Eingabetransportpaket ein Null-Paket ist, und
der Multiplexer-Kontroller (120) ferner anspricht auf das Statussignal von der Hilfspaketquelle und das Statussignal vom Null-Paketdetektor zum Substituieren eines Hilfsdatenpakets gegen das Null-Paket im Ausgabepaketstrom.

**15.** System nach Anspruch 1, ferner mit einem mit dem Multiplexer (20) verbundenen Modulator (50) zum Modulieren des Ausgabepaketstroms.

**16.** System nach Anspruch 1, bei dem
jeweilige Pakete im Eingabepaketstrom zu entsprechenden vorbestimmten Zeiten übertragen werden sollen, und
der Multiplexerkontroller zum Konditionieren des Multiplexers zum Einfügen jeweiliger Eingabetransportpakete in den Ausgabepaketstrom zu im Wesentlichen den entsprechenden Zeiten konfiguriert ist.

**17.** System nach Anspruch 1, bei dem
das Eingabepaketstromformat mit einem QAM- oder QPSK-Modulationsformat kompatibel ist und
das Ausgabepaketstromformat mit einem 8-VSB oder 16-VSB-Modulationsformat kompatibel ist.

**18.** System nach Anspruch 7, bei dem
die Quelle (70) des zusätzlichen Paketstroms Hilfsinformationen am Bildschirm darstellt.

**19.** System nach Anspruch 7, bei dem
das Eingabepaketstromformat mit den Modulationsformaten QAM, QPSK oder VSB kompatibel ist, und
das Ausgabepaketstromformat mit einem anderen der Modulationsformate QAM, QPSK oder VSB kompatibel ist.

**20.** System nach Anspruch 1, bei dem das erste Modulationsformat und das zweite Modulationsformat ein nicht-ganzzahliges Verhältnis aufweisen.

**Revendications**

**1.** Système remodulateur pour produire un flux de paquets de sortie ayant un premier format de modulation ayant un premier débit, le système remodulateur comprenant :

une source d'un flux de paquets de transport d'entrée ayant un deuxième format de modulation ayant un deuxième débit, lesdits premier et deuxième formats de modulation étant différents l'un de l'autre ;
une source (70) de paquets supplémentaires ;
un multiplexeur (20), couplé à la source de flux de paquets de transport d'entrée et à la source de paquets de sortie ;
une source (110) d'un signal de commande, en réponse aux premier et deuxième débits, pour générer le signal de commande ayant un premier état lorsqu'un paquet de transport d'entrée doit être inséré dans le flux de paquets de sortie et un deuxième état lorsque des paquets supplémentaires (4) doivent être insérés dans le flux de paquets de sortie, ledit deuxième état comprenant l'un d'un premier signal pour insérer des paquets de données auxiliaires et d'un deuxième signal pour insérer des paquets nuls,
dans lequel la source de signal de commande (110) est configurée pour accumuler la quantité de temps au cours duquel le flux de paquets de transport d'entrée est en avance sur le flux de paquets de sortie, et pour générer le signal de commande ayant le deuxième état lorsque le temps accumulé est supérieur à une durée de chaque paquet de sortie, et ayant le premier état autrement ; et

un contrôleur de multiplexeur (120), couplé entre la source de signal de commande (110) et le multiplexeur (20), pour conditionner le multiplexeur (20) pour insérer un paquet de transport d'entrée dans le flux de paquets de sortie lorsque le signal de commande a le premier état, et pour insérer un paquet supplémentaire dans le flux de paquets de sortie lorsque le signal de commande a le deuxième état.

2. Système selon la revendication 1, dans lequel lorsque la source de signal de commande (110) est configurée pour générer le signal de commande ayant le deuxième état, la durée d'un paquet de sortie est décrémentée du temps accumulé.

3. Système selon la revendication 1, dans lequel la source de signal de commande (110) comprend :

un accumulateur (204, 206) pour générer un signal ayant une valeur représentant le temps au cours duquel le flux de paquets d'entrée est en avance sur le flux de paquets de sortie ;

un comparateur (208) pour comparer le signal de sortie d'accumulateur à un signal représentant une durée de paquet de sortie, et si la valeur représentée par le signal de sortie d'accumulateur est inférieure à la valeur représentant une durée de paquet de sortie, générer le signal de commande ayant le premier état, et si la valeur représentée par le signal de sortie d'accumulateur est supérieure à la valeur représentant une durée de paquet de sortie, générer le signal de commande ayant le deuxième état.

4. Système selon la revendication 3, dans lequel la source de signal de commande (110) comprend en outre :

une source d'un signal de différence de temps ayant une valeur représentant la différence entre la durée de paquet d'entrée et la durée de paquet de sortie ;

une source d'un signal de temps de paquet de sortie ayant une valeur représentant la durée d'un paquet de sortie ; et

l'accumulateur (204, 206) est réactif au signal de différence de temps et au signal de temps de paquet de sortie, pour incrémenter de la valeur du signal de différence de temps lorsque le signal de commande a le premier état, et pour décrémenter de la valeur du signal de temps de paquet de sortie lorsque le signal de commande a le deuxième état.

5. Système selon la revendication 4, dans lequel :

la source de signal de différence de temps est configurée pour générer un signal CV ayant la valeur :

$$CV = \frac{r_t}{r_v} - 1$$

où la valeur $r_v$ est le débit de paquets de transport d'entrée et $r_t$ est le débit de paquets de sortie ;

la source de signal de temps de paquet de sortie est configurée pour générer un signal ayant la valeur -1 ; et

le comparateur (208) est configuré pour comparer le signal de temps accumulé à un signal ayant la valeur 1.

6. Système selon la revendication 4, dans lequel l'accumulateur comprend en outre :

un multiplexeur (202), ayant un premier terminal d'entrée de données couplé à la source de signal de différence de temps, un deuxième terminal d'entrée de donner couplé à la source de signal de temps de paquet de sortie, un terminal d'entrée de commande réactif au signal de commande, et un terminal de sortie ;

un additionneur (204), ayant un premier terminal d'entrée couplé au terminal de sortie du multiplexeur, un deuxième terminal d'entrée, et un terminal de sortie ; et

un verrou (206), ayant un terminal d'entrée couplé au terminal de sortie de l'additionneur, et un terminal de sortie couplé au deuxième terminal d'entrée de l'additionneur et au comparateur.

7. Système selon la revendication 1, dans lequel :

le système comprend en outre une source (208, 208') d'un signal d'horloge de paquet de sortie pour indiquer quand un paquet de sortie doit être inséré dans le flux de paquets de sortie ; et

un accumulateur configuré pour échantillonner le signal de commande en réponse au signal d'horloge de paquet de sortie et pour insérer un paquet de transport d'entrée dans le flux de paquets de sortie en réponse au signal d'horloge de paquet de sortie lorsque le signal de commande échantillonné a le premier état, et pour insérer un paquet supplémentaire dans le flux de paquets de sortie en réponse au signal d'horloge de paquet de sortie lorsque le signal de commande échantillonné a le deuxième état.

**8.** Système selon la revendication 1, dans lequel la source de signal de commande comprend un oscillateur de cycle d'usage variable (90) configuré pour générer le signal de commande ayant un cycle d'usage ayant un temps « actif » représentant la fraction du temps au cours duquel des paquets de transport d'entrée doivent être insérés dans le flux de paquets de sortie et un temps « inactif » représentant la fraction du temps au cours duquel des paquets supplémentaires doivent être insérés dans le flux de paquets.

**9.** Système selon la revendication 8, dans lequel l'oscillateur de cycle d'usage variable (90) comprend :

un accumulateur, ayant un terminal d'entrée et un terminal de sortie, pour incrémenter la valeur du signal au terminal de sortie de la valeur du signal au terminal d'entrée ;
un générateur de signal de commande, couplé au terminal de sortie de l'accumulateur, pour générer le signal de commande ;
un multiplexeur, couplé au terminal d'entrée de l'accumulateur et réactif au signal de commande, pour coupler une valeur de commande au terminal d'entrée de l'accumulateur lorsque le signal de commande a le premier état et pour coupler une valeur de commande au terminal d'entrée de l'accumulateur lorsque le signal de commande a le deuxième état.

**10.** Système selon la revendication 9, dans lequel le générateur de signal de commande comprend un circuit pour générer le signal de commande ayant le premier état lorsque la valeur au terminal de sortie de l'accumulateur est inférieure à une valeur prédéterminée et ayant le deuxième état autrement.

**11.** Système selon la revendication 9, dans lequel :

le flux de paquets de transport d'entrée a un deuxième débit binaire et le flux de paquets de sortie a un premier débit binaire ; et
la valeur de commande a la valeur CV :

$$CV = \frac{r_t}{r_v} - 1$$

où $r_v$ est le débit binaire du flux de paquets d'entrée et $r_t$ est le débit binaire du flux de paquets de transport de sortie.

**12.** Système selon la revendication 1, dans lequel :

la source de paquets supplémentaires comprend :

- une source (70) de paquets de données auxiliaires, réactive à une source de données auxiliaires, et configurée pour générer un signal de statut indiquant qu'un paquet de données auxiliaires est disponible ; et
- une source (80) de paquets nuls ; et

le contrôleur de multiplexeur (120) est en outre réactif au signal de statut de la source de paquets auxiliaires, pour insérer un paquet de données auxiliaires dans le flux de paquets de sortie sous la forme d'un paquet supplémentaire si un paquet de données auxiliaires est disponible, et pour insérer un paquet nul dans le flux de paquets de sortie sous la forme d'un paquet supplémentaire si un paquet de données auxiliaires n'est pas disponible.

**13.** Système selon la revendication 1, dans lequel :

le flux de paquets de transport d'entrée a un deuxième débit binaire et le flux de paquets de sortie a un premier débit binaire supérieur au deuxième débit binaire ;

la source de paquets supplémentaires comprend en outre :

- une source (70) de paquets de données auxiliaires, réactive à une source de données auxiliaires, et configurée pour générer un signal de statut indiquant qu'un paquet de données auxiliaires est disponible ; et
- une source (80) de paquets nuls ;

le système comprend en outre un détecteur de paquet nul (30), couplé à la source de flux de paquets de transport d'entrée, pour générer un signal de statut indiquant si un paquet de transport d'entrée suivant est un paquet nul ;

le multiplexeur (10) est en outre couplé à la source de paquets de données auxiliaires (70) et à la source de paquets nuls (80) ; et

le circuit de commande de multiplexeur (120) est réactif au signal de statut de la source de paquets de données auxiliaires, pour conditionner le multiplexeur (20) à insérer un paquet de données auxiliaires dans le flux de paquets de sortie sous la forme d'un paquet supplémentaire si un paquet de données auxiliaires est disponible, et autrement à insérer un paquet nul dans le flux de paquets de sortie sous la forme d'un paquet supplémentaire.

14. Système selon la revendication 13, dans lequel :

le flux de paquets de transport d'entrée contient des paquets nuls ;

le système comprend en outre un détecteur de paquet nul (30), couplé à la source de flux de paquets de transport d'entrée, pour générer un signal de statut indiquant si un paquet de transport d'entrée suivant est un paquet nul ; et

le contrôleur de multiplexeur (120) est en outre réactif au signal de statut de la source de paquets auxiliaires et au signal de statut du détecteur de paquet nul, pour substituer un paquet de données auxiliaires au paquet nul dans le flux de paquets de sortie.

15. Système selon la revendication 1, comprenant en outre un modulateur (50), couplé au multiplexeur (20), pour moduler le flux de paquets de sortie.

16. Système selon la revendication 1, dans lequel :

des paquets respectifs dans le flux de paquets d'entrée sont censés être transmis à des moments prédéterminés correspondants ; et

le contrôleur de multiplexeur est configuré pour conditionner le multiplexeur à insérer des paquets de transport d'entrée respectifs dans le flux de paquets de sortie sensiblement aux moments correspondants.

17. Système selon la revendication 1, dans lequel :

le format de flux de paquets d'entrée est compatible avec l'un des formats de modulation QAM et QPSK ; et
le format de flux de paquets de sortie est compatible avec un format de modulation 8-VSB ou 16-VSB.

18. Système selon la revendication 7, dans lequel :

la source (70) du flux de paquets supplémentaires représente des informations auxiliaires d'affichage à l'écran OSD.

19. Système selon la revendication 7, dans lequel :

le format de flux de paquets d'entrée est compatible avec l'un des formats de modulation QAM, QPSK et VSB ; et
le format de flux de paquets de sortie est compatible avec l'un différent desdits formats de modulation QAM, QPSK et VSB.

20. Système selon la revendication 1, dans lequel ledit premier format de modulation et ledit deuxième format de modulation ont un taux non-entier.

Fig. 1

INPUT TRANSPORT

| 1 | 2 | NULL | 4 |

**a)**

| 1 | 2 | OSD 1 | OSD 2 | 4 | NULL |

OUTPUT PACKET STREAM

INPUT TRANSPORT

| 1 | 2 | NULL | 4 |

**b)**

| 1 | 2 | NULL/OSD | 4 |

OUTPUT PACKET STREAM

INPUT TRANSPORT

| N-1 | N | N+1 | N+2 |

**c)**

| N | N+1 | NULL/OSD | N+2 |

OUTPUT PACKET STREAM

INPUT TRANSPORT

| N | N+1 | NULL | N+3 |

**d)**

| N-1 | N | N+1 | N+3 |

OUTPUT PACKET STREAM

## Fig. 2

**Fig. 3**

**Fig. 4**

**Fig. 5**

**Fig. 6**

**REFERENCES CITED IN THE DESCRIPTION**

**Patent documents cited in the description**

- US 187318 A
- EP 0980185 A
- US 09187318 B
- WO 9719560 A